# FASCICULE DE BREVET EUROPEEN

(11) **EP 0 566 443 B1**
(45) Date de publication et mention de la délivrance du brevet: **24.04.1996**
(21) Numéro de dépôt: 93400835.0
(22) Date de dépôt: 31.03.1993
(51) Int. Cl.: B60S 1/40

(54) **Dispositif d'accrochage d'un balai d'essuie-glace sur un bras d'entraînement**
Befestigungsvorrichtung für ein Scheibenwischblatt auf einem Wischarm
Device for attaching a windscreen wiper blade on a wiper arm

(30) Priorité: 14.04.1992 FR 9204558
(43) Date de publication de la demande: 20.10.1993
(73) Titulaire: VALEO SYSTEMES D'ESSUYAGE, F-78180 Montigny-Le-Bretonneux (FR)
(72) Inventeur: Vacher, Pascal, F-63500 Issoire (FR)
(74) Mandataire: Gamonal, Didier

(56) Documents cités:
- DE-A- 3 423 317
- FR-A- 2 401 044
- GB-A- 2 033 736
- GB-A- 2 231 781

## Description

La présente invention concerne un dispositif d'accrochage d'un balai d'essuie-glace sur un bras d'entraînement du balai.

L'invention concerne plus particulièrement un dispositif d'accrochage mis en oeuvre dans la réalisation d'un dispositif d'essuie-glace de véhicule automobile.

Le dispositif d'accrochage du balai sur la portion d'extrémité du bras d'entraînement a pour fonction d'assurer la liaison entre ces deux éléments en permettant l'articulation du balai d'essuie-glace autour d'un axe de palier d'articulation qui s'étend selon une direction généralement perpendiculaire à la direction longitudinale du balai d'essuie-glace et qui est relié au bras d'entraînement.

Parmi les dispositifs d'accrochage connus, celui du type comportant une pince élastique d'enclenchement à deux bras qui est reliée au bras d'essuie-glace et qui reçoit un axe de palier d'articulation du balai d'essuie-glace donne satisfaction dans la mesure où elle permet d'assurer de manière fiable les fonctions d'accrochage et d'articulation.

Un exemple d'un tel dispositif d'accrochage est par exemple décrit et représenté dans le document FR-A-2.219.860.

Il est également connu par le document FR-A-2.401.044 un dispositif d'accrochage d'un balai d'essuie-glace sur un bras d'entraînement du balai, du type comportant une pince élastique d'enclenchement à deux bras qui est reliée au bras d'entraînement et qui reçoit un axe de palier d'articulation du balai d'essuie-glace, une portion d'extrémité du bras d'entraînement étant reçue dans une cavité du corps de la pince élastique dans laquelle elle est immobilisée longitudinalement par un organe amovible de verrouillage.

On constate toutefois que la solution décrite et représentée dans ces documents nécessite une conformation particulière de la portion d'extrémité du bras d'entraînement du balai d'essuie-glace qui est complexe à réaliser. De plus, cette solution ne peut pas aisément être mise en oeuvre lorsque la portion de l'axe de palier sur laquelle est enclenchée la pince élastique est une portion s'étendant entre les deux faces ou joues latérales de l'étrier principal du balai d'essuie-glace et qui est accessible par une ouverture formée dans le dos de l'étrier.

La présente invention a pour but de proposer un dispositif d'accrochage qui permet d'utiliser un bras d'entraînement de conception particulièrement simple et standardisée et qui puisse être mis en oeuvre dans les trois types principaux d'accrochage de l'extrémité d'un bras d'entraînement sur un balai d'essuie-glace.

Ces trois types d'accrochage sont décrits et représentés dans le document FR-A-2.439.107 qui illustre un dispositif d'attache dont la conception générale permet d'assurer la liaison entre différentes formes de la portion d'extrémité du bras d'entraînement et les trois agencements possibles de la portion de l'axe de palier d'articulation qui reçoit le dispositif d'articulation.

Toutefois, la solution présentée dans ce document nécessite la réalisation d'une pièce de structure particulièrement complexe, dont l'utilisation n'est pas fiable et qui ne procure pas des résultats satisfaisants quant à l'accrochage et à l'articulation si on la compare à la pince élastique à deux branches. Enfin, cette solution n'est pas satisfaisante dans la mesure où la pièce principale d'accrochage n'est pas une pièce standard permettant de répondre aux différents besoins.

Afin de remédier à ces inconvénients, la présente invention propose un dispositif d'accrochage d'un balai d'essuie-glace sur un bras d'entraînement du balai, du type comportant une pince élastique d'enclenchement à deux bras qui est reliée au bras d'entraînement et qui reçoit un axe de palier d'articulation du balai d'essuie-glace, une portion d'extrémité du bras d'entraînement etant reçue dans une cavité du corps de la pince élastique dans laquelle elle est immobilisée longitudinalement par un organe amovible de verrouillage (Dispositif du type divulgué dans FR-A-2 401 044), caractérisé en ce que l'organe de verrouillage comporte au moins une branche de verrouillage qui s'étend transversalement à travers une ouverture formée dans le corps de la pince élastique et dont une portion immobilise longitudinalement la portion d'extrémité du bras d'entraînement par coopération de formes complémentaires.

Selon divers modes de l'invention :
- l'extrémité libre de la branche de verrouillage comporte un logement ouvert dans lequel est emboîtée élastiquement une portion de l'axe de palier ;
- la cavité est délimitée par une paroi inférieure qui constitue l'une des deux branches de la pince d'enclenchement et à travers laquelle s'étend l'extrémité libre de la branche de verrouillage ;
- la branche de verrouillage est une plaque qui est reçue dans une fente de section rectangulaire du corps de la pince d'enclenchement et qui s'étend dans un plan perpendiculaire à l'axe de palier de la pince ;
- l'extrémité du bras d'entraînement se présente sous la forme d'un fer plat qui s'étend dans un plan parallèle à l'axe du palier et qui comporte une encoche de forme complémentaire de celle de la branche de verrouillage ;
- l'organe de verrouillage comporte deux branches parallèles de verrouillage qui s'étendent chacune dans une ouverture formée dans le corps de la pince et qui sont reliées entre elles par une branche de liaison ;
- la portion d'extrémité du bras d'entraînement comporte deux encoches ouvertes, de contour rectangulaire qui sont formées respectivement dans les deux bords longitudinaux opposés de l'extrémité du bras d'entraînement ;
- la branche de liaison est une branche plate perpendiculaire aux branches de verrouillage et qui est reçue dans un évidement formé dans la paroi supérieure du corps de la pince qui délimite la cavité ;
- le logement ouvert formé dans l'extrémité libre de la branche de verrouillage présente une section circulaire dans laquelle est reçue une gorge radiale de l'axe de palier d'articulation ;
- l'axe de palier est accessible par une ouverture formée dans un dos d'un élément de structure du balai d'essuie-glace, le corps de la pince d'enclenchement comportant deux parois latérales parallèles qui délimitent la cavité et qui sont reçues entre deux joues latérales parallèles de l'élément de structure, ce dernier étant par exemple l'étrier principal du balai d'essuie-glace ;
- l'axe de palier s'étend latéralement par rapport à un élément de structure du balai d'essuie-glace tel que par exemple l'étrier principal du balai d'essuie-glace.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective illustrant les principaux composants du dispositif d'accrochage selon l'invention qui sont illustrés en position assemblés ;
- la figure 2 est une vue similaire à celle de la figure 1 dans laquelle les principaux composants sont illustrés en vue éclatée ;
- la figure 3 est une vue en coupe transversale passant par l'axe de palier du dispositif illustré aux figures 1 et 2 dans un premier exemple d'utilisation ; et
- la figure 4 est une vue similaire à celle de la figure 3 illustrant un second exemple d'application du dispositif selon l'invention.

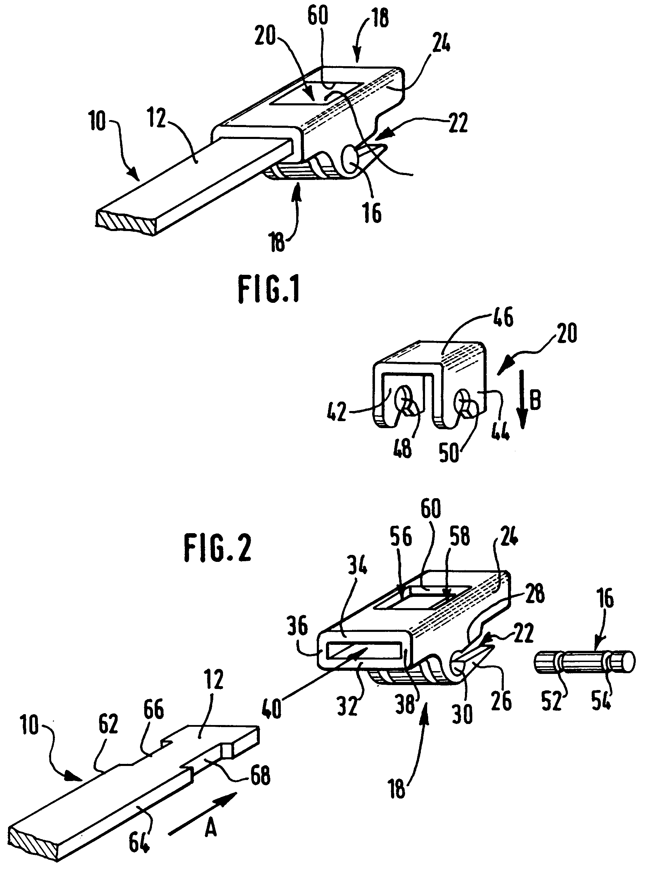

On a illustré aux figures 1 et 2 un bras d'entraînement 10 d'un dispositif d'essuie-glace de véhicule automobile.

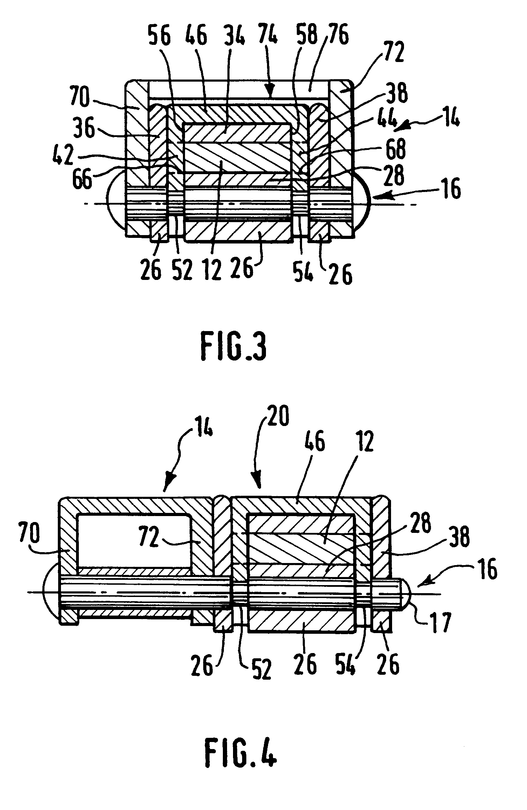

La portion d'extrémité 12 du bras d'entraînement 10 est prévue pour être reliée à un élément de structure 14 (voir figures 3 et 4) d'un balai d'essuie-glace.

Le dispositif d'accrochage selon l'invention a notamment pour but de permettre d'une part l'immobilisation longitudinale de l'élément 14 par rapport au bras d'entraînement 10 et d'autre part son articulation par rapport à ce dernier autour d'un axe de palier d'articulation 16 dont un tronçon est illustré aux figures 1 et 2.

Le dispositif d'accrochage illustré aux figures 1 à 4, est pour l'essentiel constitué par une pince d'enclenchement 18 et par un organe amovible de verrouillage 20.

La pince d'enclenchement 18 comporte, si l'on considère les figures, une partie inférieure 22 constituant la pince proprement dite et une partie supérieure 24 constituant un corps de pince.

Selon une conception connue, la partie inférieure 22 est une pince du type à deux bras 26 et 28 qui délimite une fente pour l'introduction de l'axe de palier 16 qui débouche dans un logement de section circulaire 30 qui a pour fonction d'assurer l'articulation de la pince autour de l'axe 16.

Le corps 24 de la pince 18 est de forme générale parallépipédique rectangle.

Il est pour l'essentiel constitué par une paroi inférieure 32, une paroi supérieure 34 et deux parois latérales 36 et 38.

Les parois 32 à 38 délimitent une cavité longitudinale interne débouchante 40 de section transversale rectangulaire.

La branche supérieure 28 de la pince d'enclenchement 22 est réalisée venue de matière avec la paroi inférieure 32 du corps supérieur 24.

La portion d'extrémité 12 du bras d'entraînement 10 est réalisée sous la forme d'un fer plat qui s'étend dans un plan parallèle à l'axe d'articulation de la pince d'enclenchement 22 et dont la section transversale rectangulaire est complémentaire de celle de la cavité interne 40, cette dernière étant prévue pour recevoir la portion d'extrémité 12 qui peut ainsi y être introduite longitudinalement selon la direction indiquée par la flèche A de la figure 2.

L'organe amovible de verrouillage 20 est, dans le mode de réalisation illustré aux figures, une pièce en forme générale de U inversé, ou de pont.

L'organe de verrouillage 20 comporte deux branches parallèles de verrouillage 42 et 44 et une branche de liaison 46.

Les branches de verrouillage 42 et 44 sont des pièces plates parallèles qui s'étendent dans des plans perpendiculaires à l'axe général d'articulation et au plan de la portion d'extrémité du fer plat 12.

L'extrémité inférieure libre de chacune des branches de verrouillage 42 et 44 comporte un logement ouvert 48, 50 de section générale circulaire et dont l'ouverture est de forme trapézoïdale, chacun de ces logements 48 étant prévu pour recevoir une portion correspondante de l'axe de palier 16.

Dans le mode de réalisation illustré aux figures, l'axe de palier 16 comporte deux gorges radiales 52 et 54 qui sont prévues pour être reçues respectivement, par emboîtement élastique, dans les logements ouverts 48 et 50 des branches de verrouillage 42 et 44.

La branche horizontale de liaison 46 est également une branche plate de section rectangulaire qui s'étend dans un plan perpendiculaire aux branches de verrouillage 42 et 44.

Chacune des branches de verrouillage 42 et 44 présente une section rectangulaire.

Afin de permettre son introduction dans le corps 24 de la pince 18, la face supérieure 34 du corps 24 comporte deux ouvertures en forme de fentes rectangulaires 56 et 58 qui permettent l'introduction des branches 42 et 44.

Les fentes 56 et 58 se prolongent à travers la paroi inférieure 32 du corps 24 afin de permettre l'emboîtement élastique de l'axe 16 dans les logements 48 et 50.

La cloison supérieure 34 comporte également un évidement rectangulaire 60 qui est destiné à recevoir la branche de liaison 46, lorsque l'organe amovible 20 est dans sa position verrouillée illustrée aux figures 1, 3 et 4, de façon à constituer un ensemble de contour continu.

Afin d'assurer l'immobilisation longitudinale du bras d'entraînement 10 par rapport à la pince d'enclenchement 18, la portion d'extrémité 12 comporte, sur ses deux bords longitudinaux opposés 62 et 64 deux encoches ouvertes 66 et 68.

Les encoches 66 et 68 présentent chacune un contour rectangulaire complémentaire de celui de la section de la branche de verrouillage correspondante 42 et 44 qui, lorsque l'organe de verrouillage 20 est en position assemblée, est reçue respectivement dans les encoches 66 et 68.

Les principales phases de l'assemblage des composants du dispositif d'accrochage illustré aux figures 1 et 2 sont les suivantes.

Après avoir emboîté élastiquement un tronçon de l'axe de palier 16 dans la pince élastique d'enclenchement 22, l'opérateur introduit ensuite la portion d'extrémité 12 en forme de fer plat du bras d'entraînement 10 longitudinalement dans la cavité 40 selon la direction indiquée par la flèche A.

Cette introduction se poursuit jusqu'à ce que les encoches 66 et 68 soient en regard des fentes 56 et 58 formées dans le corps 24 de la pince d'enclenchement 18.

L'opérateur n'a plus alors qu'à introduire l'organe amovible de verrouillage 20 selon la direction indiquée par la flèche B de la figure 2.

L'introduction de l'organe de verrouillage 20 provoque la pénétration des branches de verrouillage 42 et 44 dans les fentes 56 et 58 puis dans les encoches 66 et 68 et, finalement, l'emboîtement élastique des gorges radiales 52 et 54 de l'axe d'articulation 16 dans les logements ouverts 48 et 50.

Dans le premier mode d'utilisation illustré à la figure 3, le tronçon de l'axe de palier 16 qui reçoit le dispositif d'accrochage s'étend transversalement entre deux joues ou faces parallèles 70 et 72 d'un étrier principal 14 du balai d'essuie-glace.

L'axe de palier 16 est accessible depuis une ouverture 74 formée dans le dos supérieur 76 de l'étrier principal 14.

La mise en place de la pince élastique 18, de la portion d'extrémité 12 du bras d'entraînement et de l'organe de verrouillage 20 s'effectue comme cela a été indiqué précédemment.

Le mode d'utilisation illustré à la figure 4 permet, en utilisant les mêmes composants standardisés, c'est-à-dire une même conception de la portion d'extrémité 12 du bras d'entraînement 10, une même pince d'enclenchement 18 et le même organe de verrouillage 20, d'assurer l'accrochage du bras d'entraînement 10 sur un tronçon de l'axe d'articulation 16 qui s'étend latéralement à l'extérieur par rapport à un étrier principal d'articulation 14.

Le fait que le tronçon de l'axe de palier 16 qui reçoit le dispositif d'accrochage comporte deux gorges radiales 52 et 54 permet d'assurer l'immobilisation latérale c'est-à-dire selon l'axe géométrique de l'axe d'articulation 16, du bras d'entraînement 12 par rapport au balai d'essuie-glace 14.

Dans l'exemple représenté à la figure 4, l'axe 16 est porté par le balai 14. On peut envisager une disposition inverse appliquée à ce type de montage, dit montage latéral, et dans lequel l'extrémité 17 de l'axe 16 serait pourvue d'une tête de rivet et que l'extrémité opposée serait dépourvue de tête. Dans ce cas, l'axe 16 serait porté par la pièce élastique 18 et le montage avec le balai serait effectué par introduction du reste de l'axe dans des ouvertures prévues dans le balai.

On comprend donc que le dispositif d'accrochage selon l'invention permet de réaliser d'une manière très économique à l'aide de deux pièces 18 et 20 de formes simples et qui peuvent être obtenues par moulage de matière plastique, l'accrochage de différents types de balai d'essuie-glace sur un même bras d'entraînement lui-même de conception particulièrement simple, au moins à son extrémité libre, réalisée sous la forme d'un fer plat.

## Revendications

1. Dispositif d'accrochage d'un balai d'essuie-glace (14) sur un bras d'entraînement (10, 12) du balai, du type comportant une pince élastique d'enclenchement (18, 22) à deux bras (26, 28) qui est reliée au bras d'entraînement (10, 12) et qui reçoit un axe (16) de palier d'articulation du balai d'essuie-glace (14), une portion d'extrémité (12) du bras d'entraînement (10) étant reçue dans une cavité (40) du corps (24) de la pince élastique (18) dans laquelle elle est immobilisée longitudinalement par un organe amovible de verrouillage (20), caractérisé en ce que l'organe de verrouillage (20) comporte au moins une branche de verrouillage (42, 44) qui s'étend transversalement à travers une ouverture (56, 58) formée dans le corps (24) de la pince élastique (18) et dont une portion immobilise longitudinalement la portion d'extrémité (12) du bras d'entraînement (10) par coopération de formes complémentaires (66, 68).

2. Dispositif d'accrochage selon la revendication 1, caractérisé en ce que l'extrémité libre de la branche de verrouillage (42, 44) comporte un logement ouvert (48, 50) dans lequel est emboîtée élastiquement une partie (52, 54) de l'axe de palier (16).

3. Dispositif d'accrochage selon la revendication 2, caractérisé en ce que la cavité (40) est délimitée par une paroi inférieure (32) qui constitue l'une (28) des deux branches (26, 28) de la pince d'enclenchement (22) et à travers laquelle s'étend l'extrémité libre de la branche de verrouillage (42, 44).

4. Dispositif d'accrochage selon l'une quelconque des revendications 1 à 3, caractérisé en ce que la branche de verrouillage (42, 44) est une plaque qui est reçue dans une fente (56, 58) de section rectangulaire du corps (24) de la pince d'enclenchement (18) et qui s'étend dans un plan perpendiculaire à l'axe (16) de palier d'articulation de la pince (18).

5. Dispositif d'accrochage selon la revendication 4, caractérisé en ce que l'extrémité (12) du bras d'entraînement se présente sous la forme d'un fer plat qui s'étend dans un plan parallèle à l'axe de palier (16) et qui comporte une encoche (66, 68) de forme complémentaire de celle de la branche de verrouillage (42, 44).

6. Dispositif d'accrochage selon l'une quelconque des revendications 1 à 5, caractérisé en ce que l'organe de verrouillage (20) comporte deux branches parallèles de verrouillage (42, 44) qui s'étendent chacune respectivement à travers une ouverture (56, 58) formée dans le corps (24) de la pince d'enclenchement (18) et qui sont reliées entre elles par une branche de liaison (46).

7. Dispositif d'accrochage selon la revendication 6 prise en combinaison avec la revendication 5, caractérisé en ce que la portion d'extrémité (12) du bras d'entraînement (10) comporte deux encoches ouvertes (66, 68), de contour rectangulaire, qui sont formées respectivement dans les deux bords longitudinaux opposés (62, 64) de la portion d'extrémité (12) du bras d'entraînement (10).

8. Dispositif d'accrochage selon l'une des revendications 6 ou 7 prises en combinaison avec la revendication 4, caractérisé en ce que la branche de liaison (46) est une branche plate perpendiculaire aux branches de verrouillage (42, 44) et qui est reçue dans un évidement (60) formé dans la paroi supérieure (34) du corps (24) de la pince (18) qui délimite la cavité (40).

9. Dispositif selon l'une des revendications 2 ou 3, caractérisé en ce que le logement ouvert (48, 50) présente une section circulaire dans laquelle est reçue une gorge radiale (52, 54) de l'axe de palier (16).

10. Dispositif d'accrochage selon l'une quelconque des revendications précédentes, caractérisé en ce que l'axe de palier (16) est accessible par une ouverture (74) formée dans un dos (76) d'un élément de structure du balai d'essuie-glace (14), et en ce que le corps (24) de la pince d'enclenchement (18) comporte deux parois latérales parallèles (36, 38), qui délimitent la cavité (40), et qui sont reçues entre deux joues latérales parallèles (70, 72) de l'élément de structure du balai d'essuie-glace (14).

11. Dispositif d' accrochage selon la revendication 10, caractérisé en ce que l'élément de structure est un étrier de balai d'essuie-glace.

12. Dispositif d'accrochage selon l'une quelconque des revendications 1 à 9, caractérisé en ce que l'axe de palier (16) s'étend latéralement par rapport à un élément de structure (14) du balai d'essuie-glace.

## Claims

1. A device for fastening a screen wiper blade (14) on to an arm (10, 12) for driving the blade, of the type comprising a resilient gripping element (18, 22) having two arms (26, 28), which is coupled to the driving am (10, 12) and which receives a bearing pin (16) for articulation of the screen wiper blade (14), an end portion (12) of the driving arm (10) being received in a cavity (40) in the body (24) of the resilient gripping element (18), in which it is immobilised longitudinally by a removable locking member (20), characterised in that the locking member (20) has at least one locking branch (42, 44) which extends transversely through an aperture (56, 58) formed in the body (24) of the resilient gripping element (18), with a portion of the locking branch immobilising the end portion (12) of the driving arm (10) longitudinally by cooperation with complementary profiles (66, 68).

2. A fastening device according to Claim 1, characterised in that the free end of the locking branch (42, 44) has an open seating (48, 50) in which a portion (52, 54) of the bearing pin (16) is resiliently held.

3. A fastening device according to Claim 2, characterised in that the cavity (40) is defined by a lower wall (32) which constitutes one (28) of the two branches (26, 28) of the gripping element (22), and through which the free end of the locking branch (42, 44) extends.

4. A fastening device according to any one of Claims 1 to 3, characterised in that the locking branch (42, 44) is a plate element which is received in a slot (56, 58) of rectangular section in the body (24) of the gripping element (18), and which lies in a plane at right angles to the bearing pin (16) articulating the gripping element (18).

5. A fastening device according to Claim 4, characterised in that the end portion (12) of the driving arm is in the form of a flat iron, which lies in a plane parallel to the bearing pin (16) and which has a notch (66, 68), the profile of which is complementary to that of the locking branch (42, 44).

6. A fastening device according to any one of Claims 1 to 5, characterised in that the locking member (20) has two parallel locking branches (42, 44), each of which extends through a respective aperture (56, 58) formed in the body (24) of the gripping element (18), and which are joined together by a connecting branch (46).

7. A fastening device according to Claim 6 taken in combination with Claim 5, characterised in that the end portion (12) of the driving am (10) has two open rectangular notches (66, 68), which are formed respectively in the two opposed longitudinal edges (62, 64) of the end portion (12) of the driving arm (10).

8. A fastening device according to Claim 6 or Claim 7, taken in combination with Claim 4, characterised in that the connecting branch (46) is a flat branch at right angles to the locking branches (42, 44), and is received in an opening (60) formed in the upper wall (34) of the body (24) of the gripping element (18) which bounds the cavity (40).

9. A device according to Claim 2 or Claim 3, characterised in that the open seating (48, 50) has a circular cross section in which a radial groove (52, 54) of the bearing pin (16) is received.

10. A fastening device according to any one of the preceding Claims, characterised in that the bearing pin (16) is accessible through an aperture (74) formed in a spine portion (76) of a structural element of the screen wiper blade (14), and in that the body (24) of the gripping element (18) includes two parallel side walls (36, 38), which bound the cavity (40) and which are received between two parallel side portions (70,72) of the structural element of the screen wiper blade (14).

11. A fastening device according to Claim 10, characterised in that the structural element is a screen wiper blade yoke.

12. A fastening device according to any one of Claims 1 to 9, characterised in that the bearing pin (16) extends laterally with respect to a structural element (14) of the screen wiper blade.

## Patentansprüche

1. Vorrichtung zum Einsetzen eines Scheibenwischerblatts (14) an einem Wischerarm (10, 12) für den Antrieb des Wischerblatts, bestehend aus einer elastischen Rastklemme (18, 22) mit zwei Armen (26, 28), die mit dem Antriebsarm (10, 12) verbunden ist und die einen Gelenklagerzapfen (16) für das Wischerblatt (14) aufnimmt, wobei ein Endabschnitt (12) des Antriebsarms (10) in einen Hohlraum (40) des Körpers (24) der elastischen Klemme (18) eingesetzt wird, in dem er in Längsrichtung durch ein abnehmbares Arretierorgan (20) gesichert ist , **dadurch gekennzeichnet,** daß das Arretierorgan (20) wenigstens einen Arretierschenkel (42, 44) umfaßt, der sich quer durch eine im Körper (24) der elastischen Klemme (18) vorgesehene Öffnung (56, 58) erstreckt und von dem ein Abschnitt in Längsrichtung den Endabschnitt (12) des Antriebsarms (10) durch formschlüssiges Zusammenwirken von Teilen (66, 68) sichert.

2. Einsetzvorrichtung nach Anspruch 1 , **dadurch gekennzeichnet,** daß das freie Ende des Arretierschenkels (42, 44) eine offene Aufnahme (48, 50) aufweist, in die ein Teil (52, 54) des Lagerzapfens (16) elastisch eingesteckt wird.

3. Einsetzvorrichtung nach Anspruch 2 , **dadurch gekennzeichnet,** daß der Hohlraum (40) durch eine untere Wand (32) begrenzt wird, die einen (28) der beiden Schenkel (26, 28) der Rastklemme (22) bildet und durch die sich das freie Ende des Arretierschenkels (42, 44) erstreckt.

4. Einsetzvorrichtung nach einem der Ansprüche 1 bis 3, **dadurch gekennzeichnet,** daß der Arretierschenkel (42, 44) aus einer Platte besteht, die in einen mit rechteckigem Querschnitt ausgeführten Schlitz (56, 58) des Körpers (24) der Rastklemme (18) eingesetzt wird und die sich in einer Ebene erstreckt, die senkrecht zum Gelenklagerzapfen (16) der Klemme (18) verläuft.

5. Einsetzvorrichtung nach Anspruch 4 , **dadurch gekennzeichnet,** daß das Ende (12) des Antriebsarms in Form eines Flacheisens ausgeführt ist, das sich in einer Ebene erstreckt, die parallel zum Lagerzapfen (16) verläuft, und die eine formschlüssig mit dem Arretierschenkel (42, 44) ausgeführte Ausklinkung (66, 68) aufweist.

6. Einsetzvorrichtung nach einem der Ansprüche 1 bis 5, **dadurch gekennzeichnet,** daß das Arretierorgan (20) zwei parallele Arretierschenkel (42, 44) umfaßt, die sich jeweils durch eine im Körper (24) der Rastklemme (18) vorgesehene Öffnung (56, 58) erstrecken und die durch einen Verbindungsschenkel (46) miteinander verbunden sind.

7. Einsetzvorrichtung nach Anspruch 6 in Kombination mit Anspruch 5, **dadurch gekennzeichnet,** daß der Endabschnitt (12) des Antriebsarms (10) zwei offene Ausklinkungen (66, 68) mit rechteckigem Umriß aufweist, die jeweils an einer der beiden gegenüberliegenden Längskanten (62, 64) des Endabschnitts (12) des Antriebsarms (10) ausgebildet sind.

8. Einsetzvorrichtung nach einem der Ansprüche 6 oder 7 in Kombination mit Anspruch 4, **dadurch gekennzeichnet,** daß der Verbindungsschenkel (46) aus einem flachen Schenkel besteht, der senkrecht zu den Arretierschenkeln (42, 44) verläuft und der in eine Aussparung (60) eingesetzt wird, die in der oberen Wand (34) des Körpers (24) der Klemme (18) eingesetzt ist, welche den Hohlraum (40) begrenzt.

9. Einsetzvorrichtung nach einem der Ansprüche 2 oder 3, **dadurch gekennzeichnet,** daß die offene Aufnahme (48, 50) einen kreisförmigen Querschnitt aufweist, in dem eine radiale Nut (52, 54) des Lagerzapfens (16) eingesetzt wird.

10. Einsetzvorrichtung nach einem der vorangehenden Ansprüche, **dadurch gekennzeichnet**, daß der Lagerzapfen (16) durch eine Öffnung (74) zugänglich ist, die in einem Rücken (76) eines Strukturelements des Wischerblatts (14) vorgesehen ist, und daß der Körper (24) der Rastklemme (18) zwei parallele Seitenwände (36, 38) umfaßt, die den Hohlraum (40) begrenzen und die zwischen zwei parallelen Seitenwangen (70, 72) des Strukturelements des Wischerblatts (14) eingesetzt sind.

11. Einsetzvorrichtung nach Anspruch 10, **dadurch gekennzeichnet,** daß das Strukturelement aus einem Wischerblattbügel besteht.

12. Einsetzvorrichtung nach einem der Ansprüche 1 bis 9, **dadurch gekennzeichnet**, daß sich der Lagerzapfen (16) seitlich im Verhältnis zu einem Strukturelement (14) des Wischerblatts erstreckt.
